# EUROPEAN PATENT APPLICATION

(11) **EP 4 510 040 A1**
(43) Date of publication of application: **19.02.2025**
(21) Application number: 23191396.3
(22) Date of filing: 14.08.2023
(51) Int. Cl.: G06N 3/0455, G06N 3/042, G06N 5/01, G06N 20/00, G06N 3/088, G06N 3/0475, G06N 3/094, G06N 7/01

(54) **SYNTHETIC ANOMALOUS SAMPLE GENERATION**

(71) Applicant: Irdeto B.V., 2132 LS Hoofddorp (NL)
(72) Inventor: He, Shufei, Hoofddorp (NL); Alecci, Jessica, Hoofddorp (NL); Padinjarekkara, Sreekala Kallidil, Hoofddorp (NL)
(74) Representative: Boult Wade Tennant LLP

(57) **Abstract**

A method for generating synthetic anomalous samples for a system, wherein each anomalous sample is representative of an anomaly for the system, wherein the method comprises: training an autoencoder based on a first set of samples obtained from the system; applying the trained autoencoder to a second set of samples obtained from the system to identify a set of anomalous samples; training a model based on the set of anomalous samples; and using the trained model to generate said synthetic anomalous samples for the system.

## Description

### Field of the invention

The present invention relates to methods for generating synthetic anomalous samples, and systems and computer programs for carrying out such methods.

### Background of the invention

Anomaly detection is important in many real-world systems and applications. For example:
- In a financial system, being able to detect anomalies may help prevent/identify fraud, e.g. anomalies in data relating to credit card transactions may be indicative of fraudulent activity, and so being able to detect such anomalous data may help identify such fraudulent activity and/or prevent future fraudulent activity.
- In a content delivery system/service (such as a video or music streaming system), being able to detect anomalies may help prevent/identify content piracy, e.g. anomalies in data relating to user/customer activity/behaviour may be indicative of content piracy occurring, and so being able to detect such anomalous data may help identify content piracy and/or prevent future content piracy.
- Data from one or more vehicle systems/sensors (e.g. at the vehicle's coolant system, exhaust system, fuel injection system, etc.) may be collected (e.g. by an engine control unit). Being able to detect anomalies in such data may help prevent/identify vehicle malfunction.
- Data from a computer game (e.g. an online video game), may be collected, and being able to detect anomalies in such data may help prevent/identify cheating, e.g. anomalies in data relating to game player activity/behaviour may be indicative of cheating, and so being able to detect such anomalous data may help identify such cheating and/or prevent future cheating.

Of course, many other scenarios exist in which a system provides data and in which the ability to detect anomalous data (representative of an anomaly for that system) would be beneficial. An anomaly may be viewed as an observation or instance that deviates from the expected or normal behaviour of a system or dataset. Anomalies are often rare or unexpected events, patterns, or behaviours that differ from most of the data points/samples provided by the system. The nature of an anomaly will vary depending on the specific system/application and the characteristics of the data being analysed. Anomalies can be outliers, sudden changes or shifts in data distributions, or instances that violate certain predefined rules or thresholds.

By its very nature, anomalous data from a system is substantially less common than normal (non-anomalous) data. However, having access to a large amount of anomalous data can be useful for a variety of purposes (e.g. system testing, exception testing, etc.). It would, therefore, be useful to provide a mechanism for generating synthetic anomalous data.

### Summary of the invention

According to a first aspect of the invention, there is provided a method for generating synthetic anomalous samples for a system, wherein each anomalous sample is representative of an anomaly for the system, wherein the method comprises: training an autoencoder based on a first set of samples obtained from the system; applying the trained autoencoder to a second set of samples obtained from the system to identify a set of anomalous samples; training a model based on the set of anomalous samples; and using the trained model to generate said synthetic anomalous samples for the system.

In some embodiments, the model is a Gaussian mixture model, and using the trained model to generate said synthetic anomalous samples for the system comprises generating each synthetic anomalous sample as a random sample according to the Gaussian mixture model.

In some embodiments, the model is a generative adversarial network. For example, the generative adversarial network may be a conditional tabular generative adversarial network.

In some embodiments, the model is a decision tree for classifying samples obtained from the system as either anomalous samples or non-anomalous samples, and using the trained model to generate said synthetic anomalous samples for the system comprises: identifying one or more sets of one or more conditions of the decision tree, wherein, for each set of one or more conditions, satisfaction of the one or more conditions of that set leads to classification as an anomalous sample; and generating said synthetic anomalous samples by configuring each synthetic anomalous sample to satisfy the one or more conditions of at least one of the one or more sets of one or more conditions.

According to a second aspect of the invention, there is provided a method of supervised training of a machine learning classification model for which at least one class corresponds to anomalous samples, the method comprising: generating synthetic anomalous samples using the method of the above-mentioned first aspect or any embodiment thereof; and using the generated synthetic anomalous samples as samples labelled for the class that corresponds to anomalous samples when training the machine learning classification model.

According to a third aspect of the invention, there is provided a method of testing performance of a machine learning classification model for which at least one class corresponds to anomalous samples, the method comprising: generating synthetic anomalous samples using the method of the above-mentioned first aspect or any embodiment thereof; and using the generated synthetic anomalous samples as samples labelled for the class that corresponds to anomalous samples when testing performance of the machine learning classification model.

According to a fourth aspect of the invention, there is provided a system arranged to carry out a method according to any one of the above-mentioned first, second or third aspects or any embodiment thereof.

According to a fifth aspect of the invention, there is provided a computer program which, when executed by one or more processors, causes the one or more processors to carry out a method according to any one of the above-mentioned first, second or third aspects or any embodiment thereof. The computer program may be stored on a computer-readable medium.

### Brief description of the drawings

Embodiments of the invention will now be described, by way of example only, with reference to the accompanying drawings, in which:
Figure 1 schematically illustrates an example of a computer system;
Figure 2 schematically illustrates an autoencoder;
Figure 3 is a graph illustrating example frequency distributions of errors between input samples and output samples;
Figure 4 schematically illustrates a system according to some embodiments of the invention;
Figure 5 is a flowchart illustrating a method for operating the system of figure 4; and
Figure 6 illustrates an example of a trained decision tree.

### Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

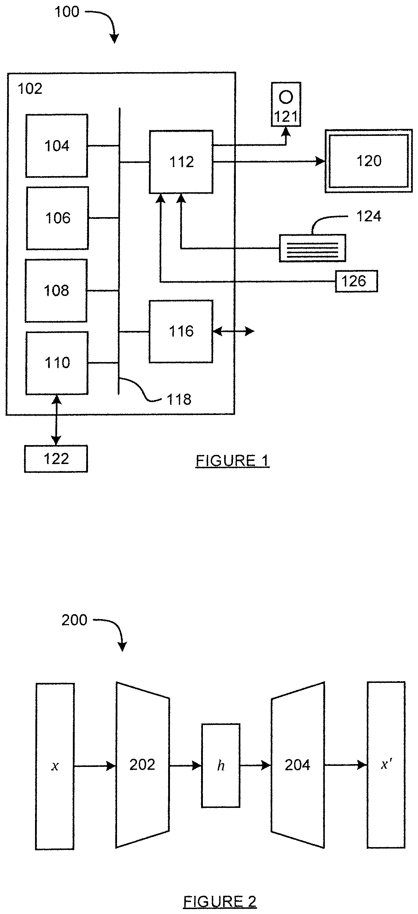

Figure 1 schematically illustrates an example of a computer system 100. The system 100 comprises a computer 102. The computer 102 comprises: a storage medium 104, a memory 106, a processor 108, a device interface 110, a user interface 112 and a network interface 116. Each of these components may be arranged to communicate with one or more of the other components via one or more communication buses 118 of the computer 102.

The storage medium 104 may be any form of non-volatile data storage device such as one or more of a hard disk drive, a magnetic disc, a solid-state-storage device, an optical disc, a ROM, etc. The storage medium 104 may store an operating system for the processor 108 to execute in order for the computer 102 to function. The storage medium 104 may also store one or more computer programs (or software or instructions or code).

The memory 106 may be any random access memory (storage unit or volatile storage medium) suitable for storing data and/or computer programs (or software or instructions or code).

The processor 108 may be any data processing unit suitable for executing one or more computer programs (such as those stored on the storage medium 104 and/or in the memory 106), some of which may be computer programs according to embodiments of the invention or computer programs that, when executed by the processor 108, cause the processor 108 to carry out a method according to an embodiment of the invention and configure the system 100 to be a system according to an embodiment of the invention. The processor 108 may comprise a single data processing unit or multiple data processing units operating in parallel, separately or in cooperation with each other. The processor 108, in carrying out data processing operations for embodiments of the invention, may store data to and/or read data from the storage medium 104 and/or the memory 106.

The device interface 110 may be any unit for providing an interface to a device 122 external to, or removable from, the computer 102. The device 122 may be a data storage device, such as one or more of an optical disc, a magnetic disc, a solid-state-storage device, etc. The device 122 may have processing capabilities - for example, the device 122 may be a smart card. The device interface 110 may therefore access data from, or provide data to, or interface with, the device 122 in accordance with one or more commands that it receives from the processor 108.

The user interface 112 may be arranged to receive input from a user, or operator, of the system 100. The user may provide this input via one or more input devices of the system 100, such as a mouse (or other pointing device) 126 and/or a keyboard 124, that are connected to, or in communication with, the user interface 112. However, it will be appreciated that the user may provide input to the computer 102 via one or more additional or alternative input devices (such as a touch screen). The computer 102 may store the input received from the input devices via the user interface 112 in the memory 106 for the processor 108 to subsequently access and process, or may pass it straight to the processor 108, so that the processor 108 can respond to the user input accordingly.

The user interface 112 may be arranged to provide a graphical/visual and/or audio output to a user, or operator, of the system 100. As such, the processor 108 may be arranged to instruct the user interface 112 to form an image/video signal representing a desired graphical output, and to provide this signal to a monitor (or screen or display unit) 120 of the system 100 that is connected to the user interface 112. Additionally or alternatively, the processor 108 may be arranged to instruct the user interface 112 to form an audio signal representing a desired audio output, and to provide this signal to one or more speakers 121 of the system 100 connected to the user interface 112. However, it will be appreciated that output may be provided to the user via one or more additional or alternative mechanisms (e.g. vibration).

Finally, the network interface 116 provides functionality for the computer 102 to download data from and/or upload data to one or more data communication networks. This may be via wired and/or wireless communication.

It will be appreciated that the architecture of the system 100 illustrated in figure 1 and described above is merely exemplary and that other computer systems 100 with different architectures (for example with fewer components than shown in figure 1 or with additional and/or alternative components than shown in figure 1) may be used in embodiments of the invention. As examples, the computer system 100 could comprise one or more of: a personal computer; a server computer; a mobile telephone; a tablet; a laptop; a geographical navigation device; a television set; a set top box; a games console; other mobile devices or consumer electronics devices; etc. Additionally, it is possible that some components of the computer system 100 are not located in the computer 102 and are, instead, part of a computer network connected to the computer 102 via the network interface 116. Additionally or alternatively, the computer system 100 may comprise multiple computers 102, e.g. in a network of computers such as a cloud system of computing resources.

Figure 2 schematically illustrates an autoencoder 200. Autoencoders are well-known (see, for example, https://en.wikipedia.org/wiki/Autoencoder, the entire disclosure of which is incorporated herein by reference). In summary, the autoencoder 200 is an artificial neural network based on unsupervised machine learning. The autoencoder 200 comprises an encoder 202 and a decoder 204. The encoder 202 is arranged to receive an input vector *x* (e.g. a vector representing an image) and to generate a compressed/compact representation (sometimes called the "code") h of the input vector *x*. The representation *h* is a vector of lower dimension than the input vector *x.* Thus, the encoder 202 maps the input vector *x* from an initial space to a latent space of lower dimension than the initial space. The decoder 204 is then arranged to receive the representation *h* and to convert the representation *h* into an output vector *x*' in the initial space. The aim of the autoencoder 200 is for the encoding applied by the encoder 202 (to generate the representation h based on the input vector *x*) to be decodable (or reversible) by the decoder 204 (when generating the vector *x*' from the representation *h).* Due to the latent space for the representation *h* being of lower dimension than the initial space for the vectors *x* and *x*', the decoder 204 will not be able to losslessly reverse the encoding applied by the encoder 202. However, the aim is for the difference (or error) between the output vector *x*' (generated based on the representation *h*) and the input vector *x* to be small.

The autoencoder 200 is initially trained based on a set of training samples. The training samples are specific to a particular context, e.g. faces of people, sounds of birds, etc. This is because, during the training process, the encoder 202 needs to learn how to create an efficient (lower-dimensional) representation *h* of an input sample *x* which can be decoded well (with little error) into a corresponding output sample *x*'; likewise, the decoder 204 needs to learn how to perform such decoding to transform the representation h into the corresponding output sample *x*'. Such learning is only possible when the training samples relate to the same context (so that a useful/consistent encoding and corresponding decoding can be learned and applied). For example, an autoencoder trained based on images of cars will not perform well on images of cats. The training of the autoencoder 200 is unsupervised, i.e. the training samples do not need to be labelled.

As mentioned, autoencoders are well-known, and so their structure, operation and training shall not be set out in more detail herein.

The autoencoder 200 may be executed/run on a computer system such as the computer system 100 of figure 1.

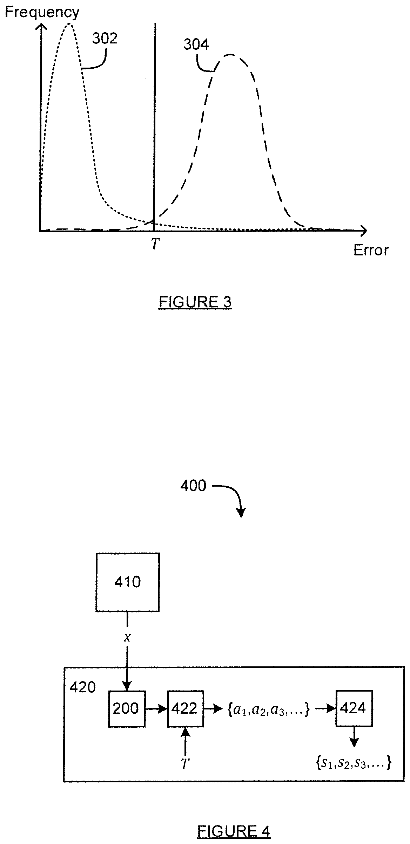

One example application of the autoencoder 200 is for anomaly detection for a given system. In particular, training samples may be taken from that given system, e.g. credit card transaction data for a financial system; user/customer behaviour/activity data for a content delivery system; sensor data from a vehicle (e.g. as collected by an engine control unit); player behaviour/activity data for a computer gaming system; etc. These context-specific training samples may be used to train the autoencoder 200. It is possible that the training samples may contain some anomalous samples, but these should be rare and, therefore, the autoencoder 200 is trained based predominantly on non-anomalous samples for the system. Thus, if the input sample *x* is a non-anomalous sample, then the difference between the input sample *x* and the corresponding output sample *x'* should be small, whereas if the input sample *x* is an anomalous sample, then the difference between the input sample *x* and the corresponding output sample *x'* should be larger. Figure 3 illustrates an example frequency distribution (the dotted line 302) of the error/difference between the input sample *x* and the corresponding output sample *x'* when the input sample *x* is a non-anomalous sample, and an example frequency distribution (the dashed line 304) of the error/difference between the input sample *x* and the corresponding output sample *x*' when the input sample *x* is an anomalous sample. A threshold *T* can be set such that if the error/difference between the input sample *x* and the corresponding output sample *x'* is less than the threshold *T* then the input sample *x* is identified as being a non-anomalous sample, whereas if the error/difference between the input sample *x* and the corresponding output sample *x*' is greater than the threshold *T* then the input sample *x* is identified as being an anomalous sample. The threshold *T* can be set based on the frequency distribution(s) 302, 304 - for example, the threshold *T* can be set based on the frequency distribution 302 to achieve a predetermined false positive probability (i.e. the threshold *T* is set large enough to ensure that the probability of incorrectly identifying a non-anomalous sample as being an anomalous sample is at most the predetermined probability); likewise, the threshold *T* can be set based on the frequency distribution 304 to achieve a predetermined false negative probability (i.e. the threshold *T* is set small enough to ensure that the probability of incorrectly identifying an anomalous sample as being a non-anomalous sample is at most the predetermined probability); likewise, the threshold *T* can be set based on the frequency distributions 302 and 304 so that the false positive probability equals the false negative probability. There are, of course, other ways of setting the threshold *T.*

The use of autoencoders for anomaly detection is well-known - see, for example, https://www.analyticsvidhya.com/blog/2022/01 /complete-guide-to-anomaly-detection-with-autoencoders-using-tensorflow/, the entire disclosure of which is incorporated herein by reference - and, therefore, this shall not be described in more detail herein.

Figure 4 schematically illustrates a system 400 according to some embodiments of the invention. The system 400 comprises a main system 410 and a synthetic anomalous sample generation system 420.

The main system 410 may be any system for which corresponding synthetic anomalous samples are to be generated by the synthetic anomalous sample generation system 420. Thus, based on the examples given above, the main system 410 may be a financial system (for which corresponding anomalous credit card transaction data samples are to be generated), or a content delivery system (for which corresponding anomalous user/customer behaviour/user data samples are to be generated), or a vehicle system such as an engine control unit (for which corresponding anomalous sensor data samples are to be generated), or a computer game monitoring system (for which corresponding anomalous player behaviour/user data samples are to be generated), etc.

The synthetic anomalous sample generation system 420 comprises the autoencoder 200, an anomalous sample detector 422, and an anomalous sample generator 424. Each of the autoencoder 200, the anomalous sample detector 422, and the anomalous sample generator 424 may be implemented in hardware, in software (as one or more computer programs), as a combination of hardware and software, or by any other means. For example, the synthetic anomalous sample generation system 420 may be implemented as a computer program suitable for execution by one or more processors 108 of the computer system 100 of figure 1.

The main system 410 and the synthetic anomalous sample generation system 420 are shown in figure 4 as separate systems and they may, therefore, be operated by different entities. Likewise, they may be operated using different computer systems in different locations and, consequently, may be arranged to communicate via one or more communication networks (such as one or more of the internet, a wireless communication network, a telecommunications network, a local area network, etc.). Alternatively, the main system 410 and the synthetic anomalous sample generation system 420 may form part of a single system and they may, therefore, be operated by the same entity.

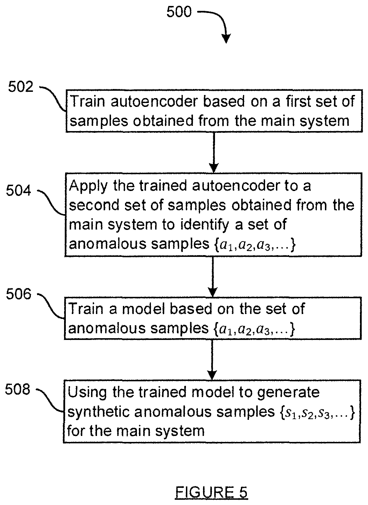

Figure 5 is a flowchart illustrating a method 500 for operating the system 400 of figure 4 according to some embodiments of the invention.

At a step 502, the autoencoder 200 is trained based on a first set of samples obtained from the main system 410. The nature of the training of the autoencoder 200 has been discussed above with respect to figure 2. For example, the synthetic anomalous sample generation system 420 may sample, or obtain (or receive), data generated by (or available at) the main system 410, and the synthetic anomalous sample generation system 420 may then use these samples to train the autoencoder 200. This may involve obtaining and using at least a predetermined number of samples for the first (training) set of samples, or this may involve the synthetic anomalous sample generation system 420 obtaining and using samples for the first (training) set of samples until the autoencoder 200 is deemed accurate enough (e.g. the mean of the frequency distribution for the error/difference between an input sample x and the corresponding output sample x' is sufficiently low, which is indicative of the encoding learned and performed by the encoder 202 and the decoding learned and performed by the decoder 204 being sufficiently accurate).

At a step 504, the anomalous sample detector 422 applies the trained autoencoder 200 to a second set of samples obtained from the main system 410 to identify (or detect) a set of anomalous samples {*a*₁,*a*₂,*a*₃,...}. Methods by which a trained autoencoder 200 may be used to identify anomalous samples based on received input samples have been discussed above with respect to figures 2 and 3. This second set of samples is, preferably, different from the first set of samples. However, this second set of samples may be obtained in the same way as the first set of samples. This second set of samples may be continuously populated/updated (so that the second set of samples continues to grow) as more and more data is provided by (or is available from) the main system 410. Thus, likewise, the set of anomalous samples {*a*₁,*a*₂,*a*₃,...) may be continuously populated/updated (so that the set of anomalous samples continues to grow) as more and more anomalous data is provided by (or is available from) the main system 410.

At a step 506, the anomalous sample generator 424 trains a model *θ* based on the set of anomalous samples {*a*₁,*a*₂,*a*₃,...) identified by the anomalous sample detector 422. Examples of the model *θ* shall be set out shortly. In some embodiments, the step 506 is performed only when a threshold number of anomalous samples have been identified at the step 504. In some embodiments, the training at the step 506 may be performed multiple times (in an on-going manner), as and when one more further anomalous samples have been identified at the step 504.

At a step 508, the anomalous sample generator 424 uses the trained model *θ* to generate synthetic anomalous samples {*s*₁,*s*₂,*s*₃,...} for the main system 410. Examples of use of the model *θ* shall be set out shortly.

In some embodiments, the model *θ* is a Gaussian mixture model (GMM). In particular, a GMM is a probabilistic model that represents a dataset (here, the set of anomalous samples {*a*₁,*a*₂,*a*₃,...}) as a combination of multiple Gaussian distributions. GMMs are well-known - see, for example, https://en.wikipedia.org/wiki/Mixture_model, https://scikit-learn.org/stable/modules/mixture.html, and https://medium.com/analytics-vidhya/sampling-from-gaussian-mixture-models-f1ab9cac2721, the entire disclosures of which are incorporated herein by reference - and they shall, therefore, not be described in more detail herein. Thus, the step 506 may involve generating a GMM *θ* to model the set of anomalous samples {*a*₁*,a*₂*,a*₃*,...*}*,* and the step 508 may then involve sampling from the GMM *θ* to generate the synthetic anomalous samples {*s*₁,*s*₂,*s*₃,...}, i.e. generating each synthetic anomalous sample *s*₁,*s*₂,*s*₃,... as a random sample according to the GMM *θ*.

In some embodiments, the model *θ* is a generative adversarial network (GAN). GANs are well-known machine learning models used for generating new samples that plausibly derive from an original dataset, i.e. given an initial set of training samples, a GAN trained on that set of training samples can produce new samples that have the same statistics as the initial training samples - see, for example, https://en.wikipedia.org/wiki/Generative_adversarial_network and https://machinelearningmastery.com/what-are-generative-adversarial-networks-gans/, the entire contents of which are incorporated herein by reference. Thus, the step 506 may involve training a GAN using the set of anomalous samples {*a*₁,*a*₂,*a*₃,...} as the GAN's set of training samples. The trained GAN is then capable of generating further samples similar to the anomalous samples *a*₁*,a*₂*,a*₃ *.....* The step 508 may therefore involve using the trained GAN to generate further samples *s*₁,*s*₂,*s*₃,...In some such embodiments, the GAN may be a conditional tabular generative adversarial network (CTGAN), which is particularly suitable for modelling data that is in a tabular form (e.g. a table having columns, some of which have discrete data and some of which have continuous data). CTGANs are well-known - see, for example, "Modeling Tabular Data using Conditional GAN", Xu et al, 33rd Conference on Neural information Processing Systems, 2019 (https://proceedings.neurips.cc/paper_files/paper/2019/file/254ed7d2de3b23ab10936522dd 547b78-Paper.pdf), and https://sdv.dev/SDV/user_guides/single_table/ctgan.html, the entire disclosures of which are incorporated herein by reference.

In some embodiments, the model *θ* is a decision tree for classifying samples obtained from the main system 410 as either anomalous samples or non-anomalous samples. Decision trees are well-known machine learning classification predictive models - see, for example https://en.wikipedia.org/wiki/Decision_tree_learning, the entire contents of which are incorporated herein by reference. Thus, at the step 504, when the anomalous sample detector 422 applies the trained autoencoder 200 to the second set of samples obtained from the main system 410 to identify (or detect) a set of anomalous samples {*a*₁*,a*₂*,a*₃*,...*}*,* samples of the second set which are not identified (or detected) as being anomalous samples are thereby identified (or detected) as being non-anomalous samples. Thus, at the step 504, when the anomalous sample detector 422 applies the trained autoencoder 200 to the second set of samples obtained from the main system 410 to identify (or detect) a set of anomalous samples {*a*₁,*a*₂,*a*₃,...}, the anomalous sample detector 422 may identify (or detect) a set of non-anomalous samples {*n*₁,*n*₂,*n*₃,...} (which may have a different number of samples than the set of anomalous samples {*a*₁,*a*₂,*a*₃,...}). The decision tree model *θ* may then be trained, at the step 506, using the set of non-anomalous samples {*n*₁,*n*₂,*n*₃,...} and the set of anomalous samples {*a*₁,*a*₂,*a*₃,...}, to be able to classify a sample as either an anomalous sample or a non-anomalous sample.

Now, as is well-known, the decision tree model *θ* comprises a hierarchy, or tree structure, of conditions (or rules or tests) at each non-leaf node of the tree structure. For any given sample, the decision tree is traversed based on whether that sample satisfies the various conditions at a non-leaf node. For example, a condition may relate to a numerical feature *V* of the sample, and the condition may, for example, be one of *V > N, V < N, V = N, V* ≥ *N, V* ≤ *N,* etc. A condition may relate to multiple features of the sample, with a criterion for each feature (which may be combined using logical operators such as an AND or an OR). Of course, non-numerical features can be tested too by a condition (e.g. if the feature is a sentence and the condition is that the sentence contains the word "hello"). Thus, it is evident that there will be one or more sets of one or more conditions of the decision tree, wherein, for each set of one or more conditions, satisfaction of the one or more conditions of that set leads to classification as an anomalous sample.

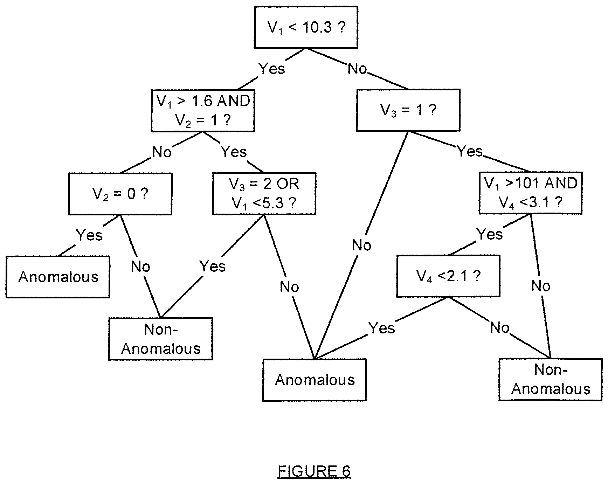

For example, figure 6 illustrates an example of a trained decision tree (based on numerical features *V*₁*, V*₂*, V*₃ and *V*₄ of samples) - it will be appreciated that, in practice, the decision tree is likely to be substantially larger and based on substantially more features, but that figure 6 is a small example for ease of illustration. Based on the conditions of this decision tree, a sample will be classified as an anomalous sample if: (a) *V*₁ < 10.3 and *V*₂ = 0 or (b) 5.3 ≤ *V₁* < 10.3 and *V*₂ = 1 and *V*₃ ≠2 or (c) *V*₁ ≥ 10.3 and *V*₃ ≠1 or (d) *V*₁ > 101 and *V*₃ = 1 and *V*₄ < 2.1. Each of (a)-(d) is a set of one or more conditions, for which satisfaction of the one or more conditions of that set leads to classification as an anomalous sample. These one or more sets of one or more conditions can be readily identified: for each leaf node that identifies a sample as anomalous, work back up to the root node of the decision tree by the path(s) available through the decision tree, compiling the conditions along that path that need to be satisfied in order to follow that path.

Thus, the step 508 may involve identifying one or more sets of one or more conditions of the decision tree, wherein, for each set of one or more conditions, satisfaction of the one or more conditions of that set leads to classification as an anomalous sample; and then generating said synthetic anomalous samples by configuring each synthetic anomalous sample to satisfy the one or more conditions of at least one of the one or more sets of one or more conditions.

For example, with reference to figure 6, a synthetic anomalous sample may be generated by selecting a value for *V*₁ that is less than 10.3 and setting *V*₂ = 0 (which would satisfy the above set (a) of conditions. The value for *V₁* could be selected as a random value less than 10.3 - this may be done uniformly (based on the allowable range of values of *V*₁*)* or may be done according to a known distribution for values of *V*₁ (e.g. a distribution determined based on the set of anomalous samples {*a*₁,*a*₂,*a*₃,...} or some other set of samples). In general, for a given set of one or more conditions, an anomalous sample may be generated by: for each feature occurring in at least one of the condition(s), setting a value for that feature such that it satisfies all of the condition(s) in that set of one or more conditions (e.g. randomly; according to a particular distribution; etc.); and for each feature not occurring in any of the condition(s), selecting a value for that feature (e.g. randomly; according to a particular distribution; based on some average (e.g. a mean, mode, median) of the feature in a set of samples, such as the second set of samples or the set of non-anomalous samples {*n*₁,*n*₂,*n*₃,...}; etc.). In some embodiments, each of the sets of one or more conditions is used to generate corresponding synthetic anomalous samples - in some such embodiments, each of the sets of one or more conditions is used to generate the same number of corresponding synthetic anomalous samples.

With embodiments of the invention, a large quantity of synthetic anomalous samples may be generated. Such synthetic anomalous samples may be used for a variety of purposes, such as: using the synthetic anomalous samples as labelled samples for testing a model's performance (e.g. a model that aims to identify anomalous samples); performing supervised machine learning to train another model (e.g. a model that aims to identify anomalous samples), e.g. where the supervised machine learning requires at least some samples labelled as "anomalous samples". Thus, embodiments of the invention may involve using synthetic anomalous samples generated by the method 500 as training data or testing data for supervised training and/or testing (respectively) of a machine learning classification model. This is particularly useful, because real life anomalous data is much more scarce than real life non-anomalous data, and so being able to generate synthetic anomalous data helps to balance the amounts of data in the classes under consideration (i.e. so that the number of samples used for a class of anomalous data can be of comparable size to the number of samples used for a class of non-anomalous data). Likewise, this approach may be useful when there are restrictions on how real-life data can be used (e.g. when privacy/confidentiality requirements on usage of real-life samples need to be complied with).

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or one or more graphical processing units (GPUs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then one or more storage media and/or one or more transmission media storing or carrying the computer program form aspects of the invention. The computer program may have one or more program instructions, or program code, which, when executed by one or more processors (or one or more computers), carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, byte code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A method for generating synthetic anomalous samples for a system, wherein each anomalous sample is representative of an anomaly for the system, wherein the method comprises:
training an autoencoder based on a first set of samples obtained from the system;
applying the trained autoencoder to a second set of samples obtained from the system to identify a set of anomalous samples;
training a model based on the set of anomalous samples; and
using the trained model to generate said synthetic anomalous samples for the system.

2. The method of claim 1, wherein the model is a Gaussian mixture model, and wherein using the trained model to generate said synthetic anomalous samples for the system comprises generating each synthetic anomalous sample as a random sample according to the Gaussian mixture model.

3. The method of claim 1, wherein the model is a generative adversarial network.

4. The method of claim 3, wherein the generative adversarial network is a conditional tabular generative adversarial network.

5. The method of claim 1, wherein the model is a decision tree for classifying samples obtained from the system as either anomalous samples or non-anomalous samples, and wherein using the trained model to generate said synthetic anomalous samples for the system comprises:
identifying one or more sets of one or more conditions of the decision tree, wherein, for each set of one or more conditions, satisfaction of the one or more conditions of that set leads to classification as an anomalous sample; and
generating said synthetic anomalous samples by configuring each synthetic anomalous sample to satisfy the one or more conditions of at least one of the one or more sets of one or more conditions.

6. A method of supervised training of a machine learning classification model for which at least one class corresponds to anomalous samples, the method comprising:
generating synthetic anomalous samples using the method of any one of claims 1 to 5; and
using the generated synthetic anomalous samples as samples labelled for the class that corresponds to anomalous samples when training the machine learning classification model.

7. A method of testing performance of a machine learning classification model for which at least one class corresponds to anomalous samples, the method comprising:
generating synthetic anomalous samples using the method of any one of claims 1 to 5; and
using the generated synthetic anomalous samples as samples labelled for the class that corresponds to anomalous samples when testing performance of the machine learning classification model.

8. A system arranged to carry out a method according to any one of claims 1 to 7.

9. A computer program which, when executed by one or more processors, causes the one or more processors to carry out a method according to any one of claims 1 to 7.

10. A computer-readable medium storing a computer program according to claim 9.
